# EUROPEAN PATENT SPECIFICATION

(11) **EP 3 648 941 B1**
(45) Date of publication and mention of the grant of the patent: **02.08.2023**
(21) Application number: 18740347.2
(22) Date of filing: 28.06.2018
(51) Int. Cl.: B29C 44/44, B29C 44/58, B29C 33/00, B29C 44/34, B29C 44/08, B29C 44/04, B29K 105/04, B29L 31/00

(54) **DEVICE AND METHOD FOR PRODUCTION OF A PLATE-LIKE FOAMED MOULDED PLASTIC PRODUCT**
VORRICHTUNG UND VERFAHREN ZUR HERSTELLUNG EINES PLATTENFÖRMIGEN GESCHÄUMTEN FORMKUNSTSTOFFPRODUKTS
DISPOSITIF ET PROCÉDÉ DE PRODUCTION D'UN PRODUIT EN PLASTIQUE MOULÉ EN MOUSSE EN FORME DE PLAQUE

(30) Priority: 05.07.2017 NL 2019184
(43) Date of publication of application: 13.05.2020
(73) Proprietor: IsoBouw Systems B.V., 5711 EG Someren (NL)
(72) Inventor: KNIPPERS, Franciscus Gerardus Maria, 5711 EG Someren (NL); MORSINK, Gerhardus Antonius Alphonsus, 5711 EG Someren (NL); RENSEN, Petrus Frederikus Maria, 5711 EG Someren (NL); VAN DER BURGT, Petrus Henricus Johannes, 5711 EG Someren (NL)
(74) Representative: Algemeen Octrooi- en Merkenbureau B.V.
(86) International application number: PCT/NL2018/050420
(87) International publication number: WO 2019/009704

(56) References cited:
- EP-A1- 2 907 643
- DE-A1- 3 405 231
- DE-A1-102015 112 149
- DE-U1- 9 405 901
- DE-U1-202011 109 598
- JP-A- S55 118 838
- US-A1- 2015 030 714

## Description

### Description

The present invention relates to a device for production of a plate-like foamed plastic product. The invention is directed namely at the production of relatively large, at least substantially plate-like, plastic products such as insulation panels of expanded polystyrene (EPS), the width and length of which are at least 1 meter, and the thickness of which is maximum 50% of the smallest of the length and width dimensions. Such insulation panels are used for insulating walls or roofs of building constructions. For the production of such panels, it is known to use a mould with a block-like mould cavity of the size for example of 8 m x 1.2 m x 1.65 m. The EPS block produced with such a mould is then divided into pieces to produce insulation panels of the desired dimensions. Residual waste may occur here. Such a type of mould is described in DE 10 2009 028 987 B9. Semi-finished products are therefore produced in such a mould.

DE 10 2015 112 149 A1 describes a mould for a device manufacturing foam articles. The mould includes a mould chase and a mould plate movable relative to the mould chase.

The invention concerns a device according to the preamble which is relatively compact and small, with which a relatively short conversion time is possible for producing foamed plastic moulded products with different dimensions in an efficient manner. More specifically, in the first instance, the aim is to create a device with which it is possible to produce at least substantially plate-like moulded (end) products with different thicknesses in an economically feasible fashion and in relatively small series. For this, the invention proposes a device according to claim 1. The use of the first mould body with a box-shaped first mould wall, and the second mould body which is movable to and fro inside said box form in order thus to define the mould cavity, allows a relatively short conversion time. The use of the first steam cavity which, except for the above-mentioned first mould wall and second mould wall, is surrounded by the sealing body, makes it possible to make the volume of the steam cavity independent of the size of the matrix cavity, whereby steam can be used efficiently.

In an embodiment according to claim 7, the advantage is achieved that the main faces laid against each other of a plate-like product produced with the invention do not necessarily run parallel to each other, but enclose an angle with each other, wherein the angle can be adjusted by means of the first connecting means.

To prevent or at least limit the risk of steam condensing on the first mould wall, it may be advantageous if the device is provided with heating means for heating the first mould wall.

Such heating means may comprise a second steam cavity on the outside of the first mould wall, to which steam can be supplied by means of the second supply means.

The first mould wall may here furthermore be configured to allow the passage of steam from the second steam cavity to the mould cavity and/or to the first steam cavity.

In order to obtain a significant range with regard to the thickness of the plate-like products which can be produced with the device according to the invention, it may be advantageous if, in the closed state of the mould, the dimension of the mould cavity, viewed in a direction perpendicular to the second mould wall, at least because of the function of the second positioning means, is adjustable between a minimum dimension and a maximum dimension, wherein the ratio between the maximum dimension and the minimum dimension is at least 1.5. Further preferably, said ratio may be at least 2 or 5. A suitable minimum dimension may be 4 cm. A suitable maximum dimension may be 60 cm. If both the latter extreme dimensions are applied, the above-mentioned ratio is therefore 15. In the case that further second positioning means are used, according to a further embodiment to be described, the function of the further second positioning means may also contribute to achieving the above-mentioned ratios.

According to the invention the second mould body with mould walls is designed similarly to the first mould wall and the second mould wall of the first mould body.

The similarity between the second mould body and the first mould body may be even greater if the second mould body is also designed with a steam cavity similar to the first steam cavity belonging to the first mould body.

The box form of the first mould wall is preferably identical to the box form of the further first mould wall. If the box forms are aligned relative to each other, a plate-like product can be formed, the peripheral sides of which are completely flat.

However, the use of a second mould body with a box-shaped further first mould wall and a further second mould wall as described above offers precisely the advantage that a rebate may be formed in said peripheral sides. According to the invention, the box form of the first mould wall is displaceable relative to the box form of the further first mould wall, so that the mould cavity has a stepped form. The rebate may be formed either only on two mutually opposing peripheral sides of the plate-like product or on four mutually opposing peripheral sides, assuming the plate is rectangular.

To determine the size of the rebate, the device may be fitted with adjustment means allowing adjustment of the dimensions of the box form when the mould wall is displaced relative to the box form of the further first mould wall.

If the box form of the first mould wall is displaced in a displacement direction relative to the box form of the further first mould wall, which displacement direction may extend parallel to a diagonal of the box form of the first mould wall, in a simple fashion a mould cavity may be formed for production of an at least substantially plate-like product which is provided with a rebate around the complete periphery.

A device according to claim 10 may firstly be produced relatively simply and secondly offers, in a simple fashion, the possibility of giving the mould cavity and the product to be produced therewith a desired form.

To prevent leakage of steam and/or plastic material to be foamed and supplied to the mould cavity, it may be advantageous to configure the device according to claim 11.

If the contact faces are located on mutually facing ends of the first mould body and the second mould body, in the movement direction there is no overlap between parts of the first mould body and the second mould body.

In the embodiment according to claim 13, an intermediate body is used between the first mould body and the second mould body. With the device according to claim 13, it is possible to provide a plate-like product with a tongue and groove on the peripheral sides.

The invention furthermore relates to a method for production of a foamed plastic product using a device according to the invention as described above, and comprising steps as stated in claim 14.

In general, the present invention also relates to a method for changing a mould cavity of a device according to the invention. Such a change is required in any case in order to convert from production of one product to production of another product with a different form. The mould cavity is changed by displacing the box form of the first mould wall relative to the box form of the further first mould wall in a direction perpendicular to the movement direction. The extent and direction of displacement thus determine the size and position of the rebate.

The invention will be explained in more detail below using the description of a possible embodiment of a device according to the invention, with reference to the following figures:
Figures 1 and 2 show in a perspective view a device according to the invention;
Figure 3 shows a longitudinal cross-section of part of the device according to figures 1 and 2;
Figures 4a and 4b show transparently a part of sealing elements at the respective corners thereof, as these may be used in a device according to figures 1 to 3;
Figures 5a and 5b show two variants of sealing elements in cross-section;
Figure 6 shows a product which may be produced with the device according to figures 1 to 3;
Figure 7 shows another product which may be produced with the device according to figures 1 to 3;
Figure 8 shows a longitudinal cross-section of another embodiment of a device according to the invention in the closed state;
Figure 9 shows the device from figure 8 in open state;
Figure 10 shows a product which may be produced with the device according to figures 8 and 9.

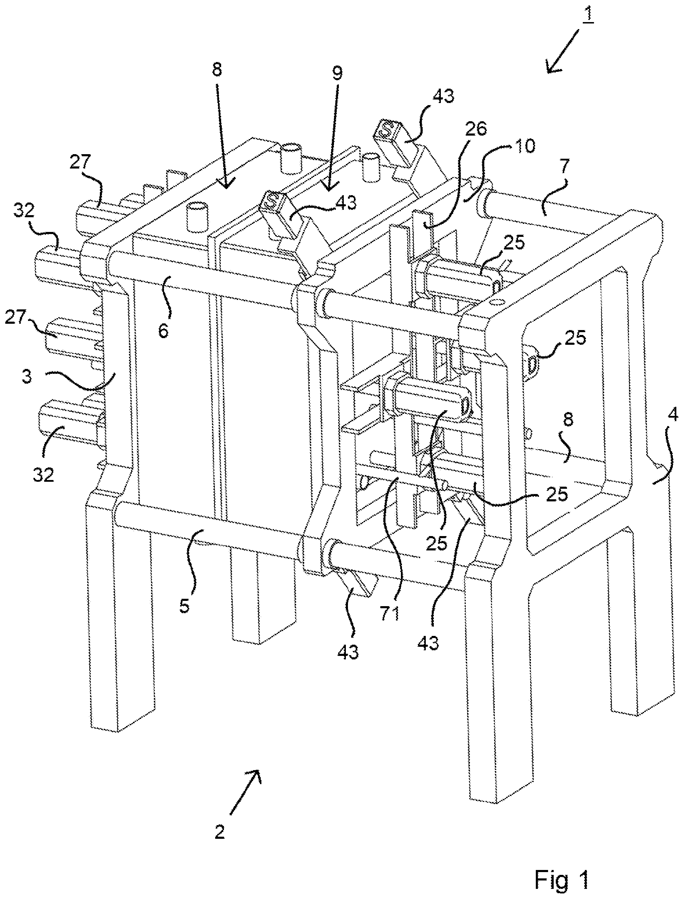

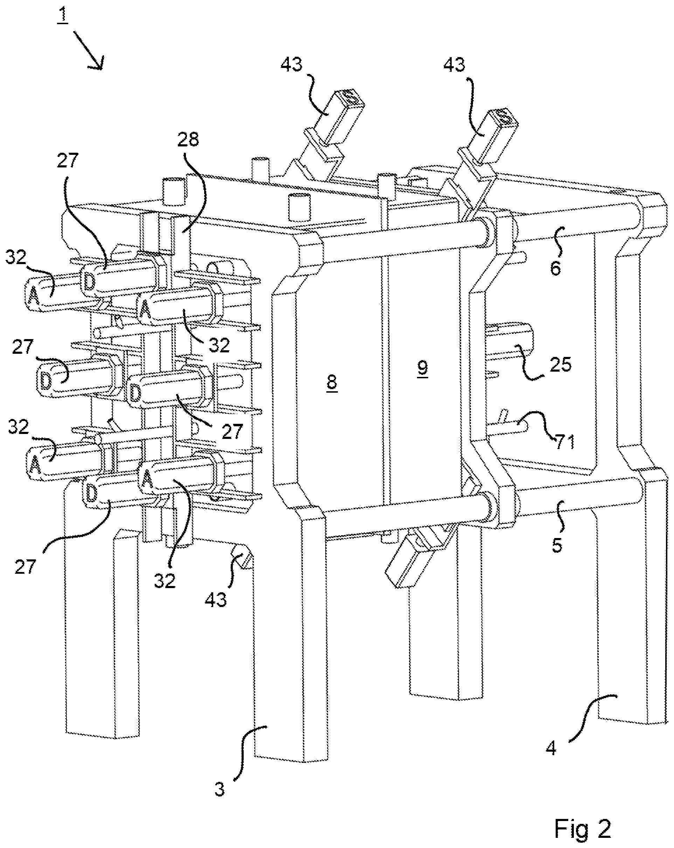

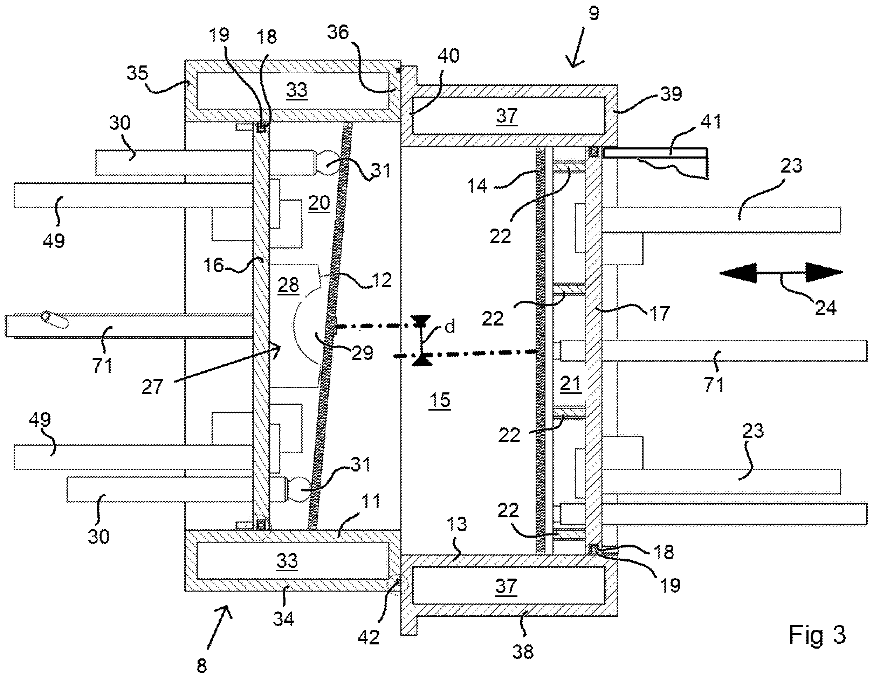

The device 1 according to figures 1 to 3 comprises a frame 2 with two uprights 3, 4 which are connected together by means of four bars 5, 6, 7, 8. The device 1 furthermore comprises a first mould body 8 and a second mould body 9. The first mould body 8 is rigidly connected to the upright 3. The second mould body 9 is connected to the framework 10. The framework 10 is movable to and fro along the bar 5 by means of positioning means (not shown in detail) which rest on the frame 2. The respective positioning means may for example be cylinders or electrically driven, bent arm systems. By said movement of the framework 10, the second mould body 9 may be positioned against the first mould body 8, as shown in figure 3.

The first mould body 8 comprises a box-shaped first mould wall 11 with a second mould wall 12 on the inside of the box form. The second mould body 9 comprises a box-shaped further first mould wall 13 and a further second mould wall 14 on the inside of the box form of the further first mould wall 13. The second mould wall 12 and the further second mould wall 14 at their respective peripheries adjoin the insides of the first mould wall 11 and the further first mould wall 13. The box forms of the first mould wall 11 and of the further first mould wall 13 are rectangular and identical to each other. The length of each of the sides of the rectangle is between 1.0 meter and 2.5 meters.

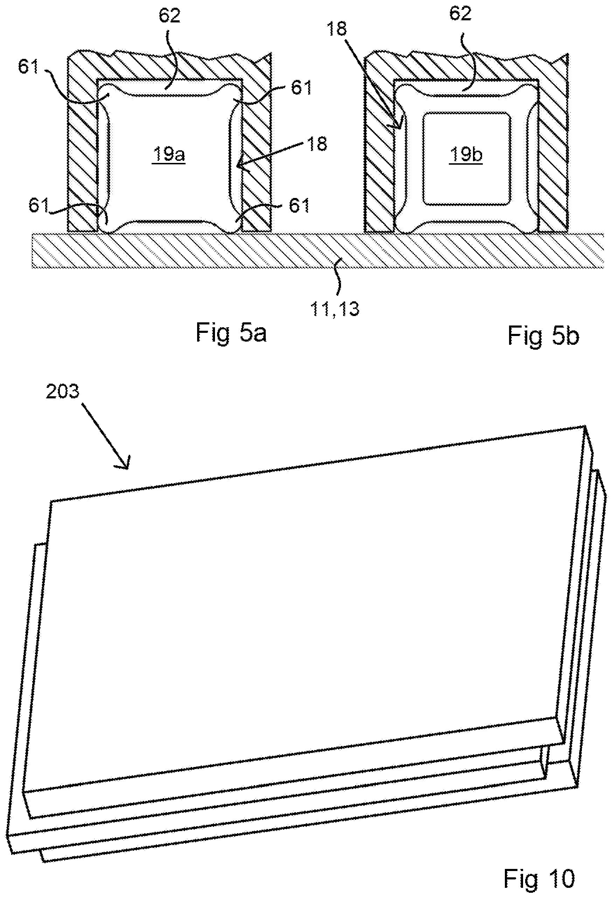

In the closed state shown in figure 3, the first mould wall 11, the second mould wall 12, the further first mould wall 13 and the further second mould wall 14 form a mould cavity 15 between the second mould wall 12 and the further second mould wall 14. On the sides facing away from the mould cavity 15 of the second mould wall 12 and further second mould wall 14 respectively, the first mould body 8 and the second mould body 9 are provided with a plate-like first sealing body 16 and a plate-like further sealing body 17. The sealing body 16 and the further sealing body 17 are provided on their peripheries with a continuous groove, such as the grooves 18 in figures 5a and 5b, which contains an endless sealing element such a sealing element 19a to 19d in figures 5a and 5b. The respective sealing element, generally indicated with reference numeral 19, on the open outside of the groove 18, adjoins the inside of the first mould wall 11 or second mould wall 13 at least in the active state of the sealing element 19. The sealing body 16, the first mould wall 11 and the second mould wall 12 form a first steam cavity 20 between the first sealing body 16 and the second mould wall 12, which cavity belongs to the first mould body 8. Similarly, the further second mould wall 14, the further first mould wall 13 and the further sealing body 17 form a further first steam cavity 21 between the further second mould wall 14 and the further sealing body 17.

The second mould wall 12 and the further second mould wall 14 are permeable to steam, for example by being provided with relatively small passages for the steam, such as occur for example if the second mould wall 12 and the further second mould wall 14 are made of so-called wedge wire screen material. This steam from the first steam cavity 20 and from the further first steam cavity 21 may penetrate through the second mould wall 12 and the further second mould wall 14 respectively into the mould cavity 15. Steam from a steam source (not shown in more detail) can be supplied to the steam cavity 20 and/or to the further first steam cavity 21 via steam pipes (not shown in detail) which open into the sealing body 16 or into the further sealing body 17.

The further second mould wall 14 is rigidly connected via connecting bars 22 which extend inside the further first steam cavity 21. On the side facing away from the further first steam cavity 21, the further sealing body 17 is rigidly connected to shaft bodies 23 which extend parallel to the bars 5 of the frame 2. By means of the shaft bodies 23, the further sealing body 17 - and hence the further second mould wall 14 rigidly connected thereto - may be moved to and fro in a movement direction according to the double arrow 24, on the inside of the box-shaped further first mould wall 13. During such a movement, the size of the further first steam cavity 21 changes, but not the size of the mould cavity 15. The sealing bodies 23 can be moved to and fro in their length direction by means of actuators 25 which are attached to the cruciform subframe 26 which is rigidly connected to the framework 10.

Similarly, the second mould wall 12 and the sealing body 16 of the mould body 8 can be moved to and fro in the movement direction 24 inside the box form of the first mould wall 11, for which the sealing body 16 is rigidly connected to shaft bodies 49. The shaft bodies 49 can be moved to and fro in their length direction by means of actuators 27 which are attached to the subframe 28 which is itself rigidly attached to an upright 3 of the frame 2. On movement of the second mould wall 12 with the sealing body 16 to and fro in the movement direction 24, the size of the first steam cavity 20 changes but not that of the mould cavity 15.

The second mould wall 12 is connected pivotably to the sealing body 16 via hinge member 27 which extends into the first steam cavity 20. The hinge member 27 comprises a guiding member 28 which is rigidly connected to the sealing body 16, with a guiding face with an arcuate cross-section, and a guided member 29 which is rigidly connected to the second mould wall 12 which is also provided with an arcuate guiding face. The radii of the respective arcs are identical and the centre points of the arcuate forms coincide with each other on the side of the second mould wall 12 facing towards the mould cavity 15.

The hinge member 27 is provided in the centre of the box form of the first mould wall 11. Above and below the hinge member 27, pushrods 30 are provided which extend parallel to the shaft bodies 49. The pushrods 30 have dish-like ends 31 and extend out through steam-tight sealed passages in the sealing body 16. The pushrods 30 can be moved to and fro in their length direction using actuators 32 which, like the actuators 27, rest on the subframe 28. Adjustment of the angle which the second mould wall 12 encloses with the movement direction 24 takes place by moving either the top pushrods 30 or the two bottom pushrods 30 in the direction of the mould cavity 15, whereby the second mould wall 12 hinges on the hinge member 27. Provided that this angular adjustment is not too great, in practice an adequate application of the periphery of the second mould wall 12 on the inside of the first mould wall 11 can be obtained. The two mutually opposing pushrods 30 then perform a retraction movement.

On the outside of the first mould wall 11, the mould body 8 furthermore comprises a second continuous steam cavity 33. Apart from the first mould wall 11, the second steam cavity 33 is surrounded by an outer wall 34 extending parallel to the first mould wall 11, an outer longitudinal wall 35 and an inner longitudinal wall 36. Similarly, the second mould body 9 has a further second steam cavity 37 which, apart from the further first mould wall 13, is surrounded by the further outer wall 38, the further outer longitudinal wall 39 and the further inner longitudinal wall 40.

In operation, steam is supplied from a steam source via steam pipes (not shown in detail) to the second steam cavity 33 and the further second steam cavity 37, in order to heat the first mould wall 11 and the further first mould wall 13 and hence prevent steam from condensing on these walls 11, 13. To do this, the mould walls 11, 13 may also be heated in another fashion, for example via electrical resistance heating. It is also possible to make the first mould wall 11 and/or the further first mould wall 13 at least partially permeable to steam, so that steam from the second mould cavity 33 and from the further second steam cavity 37 may flow into the mould cavity 15 and in some cases also into the first steam cavity 20 and into the further first steam cavity 21.

To prevent or at least limit the flow of steam from the second steam cavity 33 or the further second steam cavity 37 into the region of the sealing body 16 or further sealing body 17 facing away from the steam cavity 15, it is also possible to provide a box-shaped closing body 41 on the inside of the first mould wall 11 and/or the further first mould wall 13, as indicated in figure 3 with reference sign 41 exclusively on the top side for the further first mould wall 13. The closing body 41 then moves together with the further sealing body 17 in the movement direction 24.

In the closed state shown in figure 3, the inner longitudinal wall 36 and the further inner longitudinal wall 40 lie against each other. In the outside half of the inner longitudinal wall 36, a seal 42 is provided for a steam-tight seal of the seam between the inner longitudinal wall 36 and the further inner longitudinal wall 40.

As shown in figure 3, the box forms of the first mould wall 11 and the further first mould wall 13 are displaced over a distance d relative to each other. In this way, the mould cavity 15 has a stepped form, whereby plate-like products with a rebate along the periphery can be formed inside the mould cavity 15. The second mould body 9 is movable in the diagonal direction relative to the first mould body 8 by means of actuators 43, which are active between the framework 10 and the second mould body 9, in a direction which extends perpendicularly to the movement direction 24. Because the seal 42 is provided on the outside of the inner longitudinal wall 36, viewed in variable directions, the seal 42 retains its function despite the fact that the first mould body 8 and the second mould body 9 - or at least the centre lines thereof - have been displaced over a distance d relative to each other. To increase the possible extent of eccentricity, the further inner longitudinal wall 40 extends to beyond the further outer wall 38.

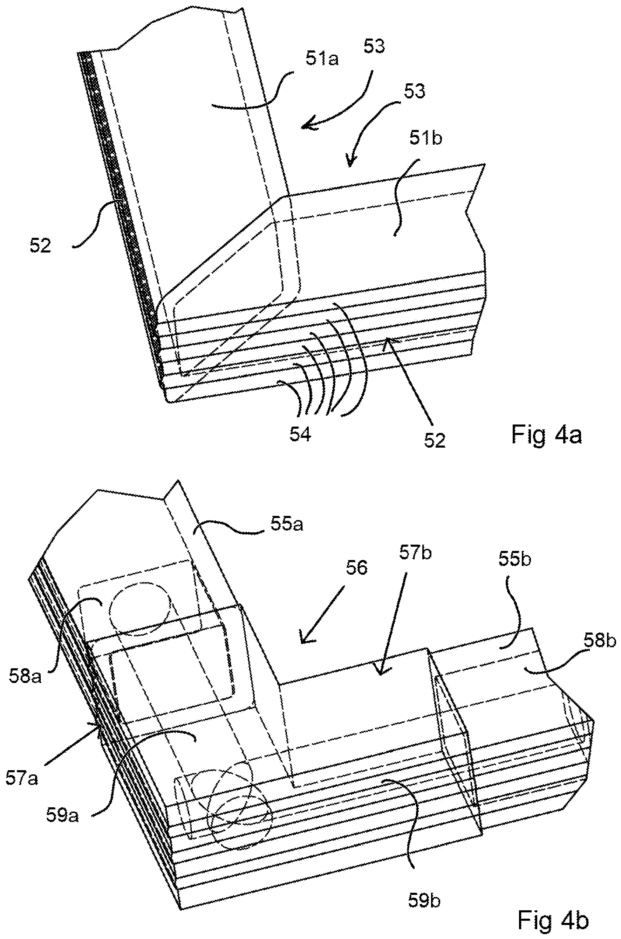

Figures 4a to 5b show alternative embodiments of sealing elements 19 as may be used in the groove 18 on the periphery of sealing body 16 and on the periphery of the further sealing body 17. Figure 4a shows the ends of two rubber hoses 51a, 51b which adjoin each other squarely, for example are connected together by vulcanisation. The hoses 51a, 51b have a rectangular cross-section. The respective sealing element comprises four hose parts as hose parts 51a, 51b which adjoin each other squarely as shown in figure 4a. By inflating these hose parts, the outside 52 of the sealing element 19 is pressed against the inside of the first mould wall 11 or the further first mould wall 15. The inside 53 of the sealing element comes to lie against the base of the groove 18. To improve the sealing effect, the outside 52 of the sealing element 19 is provided with a number of continuous erect edges 54.

In the sealing element according to figure 4b, four hose parts are also used, of which only the hose parts 55a, 55b are shown in figure 4b. The hose parts 55a, 55b may be of the same type as the hose parts 51a, 51b and may therefore be inflated. The hose parts 55a, 55b are joined together by means of a right-angled corner piece 56. The corner piece 56 has two arms 57a, 57b which adjoin each other squarely. The arms 57a, 57b are provided at their ends with push-on parts 58a, 58b over which the ends of the hose parts 55a, 55b are pushed. By means of a glue connection between the push-on parts 58a, 58b on one side and the hose parts 55a, 55b on the other, an air-tight connection is created between the hose parts 55a, 55b and the corner piece 56. The contour of the arms 57a, 57b viewed in cross-section is identical to the contour of the hose parts 55a, 55b. Two bores 59a, 59b are made in the arms 57a, 57b and are connected together so that the interior of hose part 55a is connected via the interior of the corner piece 56 to the interior of the other hose part 58b. Inflating the hose parts 55a, 55b not only leads to the deformation of the hose parts 55a, 55b as described for hose parts 51a, 51b, but also elongates the hose parts 55a, 55b, whereby the corner piece 56 is pressed into the corner of the groove 18 so that a good seal can be obtained even in the corner of the groove 18.

Figure 5a shows a variant of the sealing element 19a which has a completely solid cross-section. The cross-section is substantially quadrilateral in form but has protruding corner edges 61. By increasing the air pressure in the cavity 62 between the base of the groove 18 (which is also shown on the top side in figure 5d) and the side of the sealing element 19a facing said base, the sealing element 19a is pressed downward against the first mould wall 11 or respectively the further first mould wall 13.

In the variant of figure 5b, the sealing element 19d is hollow so that this can also be inflated to achieve a better sealing effect.

The device 1 may be used as follows. Starting from the situation in figures 1, 2 and 3 in which the mould cavity 15 is closed, plastic material to be foamed, in the form of granules, for example typically polystyrene granules, is supplied through injector pipes 71 to the mould cavity 15. Then the steam is supplied to the first steam cavity 20 and the further first steam cavity 21, and flows into the steam cavity 15 distributed over the surface of the second mould wall 12 and the further second mould wall 14. Under the influence of this steam, the polystyrene granules expand and adhere to each other. During this process, the second steam cavity 33 and the further second steam cavity 37 are filled with steam, so that the temperature of the first mould wall 11 and the further first mould wall 13 is around 80° Celsius, whereby the risk of undesirable condensation of steam inside the mould cavity 15 can be excluded. By means of reduced pressure, the steam and any moisture are then extracted from the mould cavity 15 via the passages of the second mould wall 12 and in the further mould wall 14. Then the second mould body 9 is moved in the direction of the upright 4 so that the mould cavity 15 opens and the foamed plastic product thus formed can be released.

As an alternative to the latter step of directly opening the mould cavity 15, it is also possible firstly to enlarge the mould cavity 15 by moving the second mould wall 12 and/or the further second mould wall 14 back by means of the shaft bodies 49 and/or 23. Then the enlarged part of the mould cavity 15 is again filled, via injector pipes 71, with plastic granules to be foamed and of another type from the type injected into the mould cavity 15 in the first instance, typically of a different quality, whereupon for a second time steam can be introduced into the mould cavity 15, whereby the plastic material supplied in the second instance adheres to itself and to the plastic material previously foamed in the mould cavity 15. Then the mould cavity 15 may be opened after steam and moisture have been extracted from the mould cavity 15, by moving the second mould body 9 in the direction of the upright 4 along the bars 5, 6, 7 and 8.

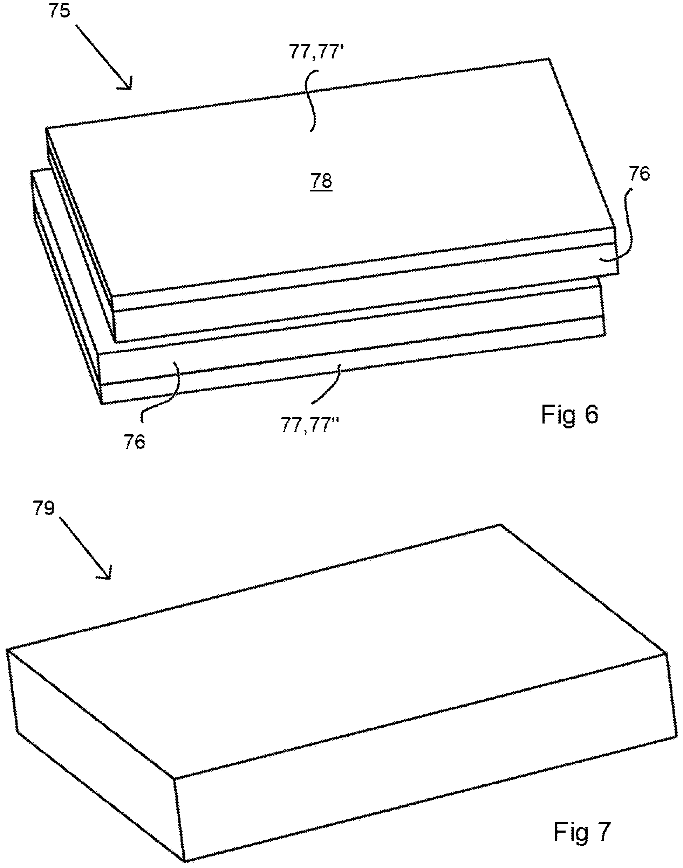

Thus an at least substantially plate-like foamed plastic product may be obtained, as shown in figure 6 and indicated with reference sign 75. The product is provided with a rebate all round because of the eccentricity d. Such rebates may serve to ensure that the plates 75 adjoin each other firmly without a continuous seam between the plates 75 over the complete thickness of the plates 75. The plate 75 consists of two materials, namely core material 76 in the middle of the thickness of the plate 75, and material 77 on the two outsides viewed in the thickness direction of plate 75. The material 77 may for example have a different density, a different UV resistance, a different colour, different fire properties and/or different insulation properties from the material 76. It may also be that two different materials 77' and 77" are applied on the two outsides in the thickness direction of the plate 75. It is conceivable that for example the material 77' has a higher density in order to improve its walk-support capacity, while material 77" has better fire-resistance properties. The product 55 may then be applied to a flat roof, wherein material 77' is on the top and material 77" on the underside.

Figure 6 also shows that two mutually opposing main faces of plate 75 do not extend parallel to each other, but at least in figure 6, the topmost main face 78 lies sloping for example at an angle of between 1 ° and 15° relative to the bottom main face of plate 75. Such a slope may be advantageous for example to obtain a fall on a roof if plate 75 or plates 75 are used as insulation for flat roofs. The thickness of the layer with material 77' is constant despite said slope, whereby material 77' is used efficiently. The device 1 thus allows the production of relatively complex foamed plastic products, wherein also short conversion times between series of different products can be achieved thanks to the possibilities for adjustment of the mould cavity 15 as described above. Secondly, it is also possible with device 1 to produce a simple plate-like product such as product 79 in figure 7, is the eccentricity d is equal to 0.

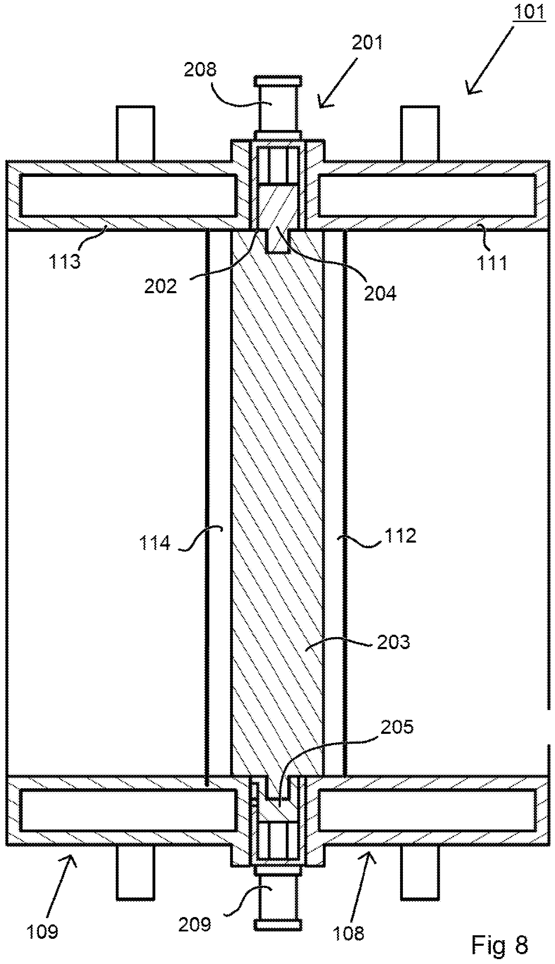

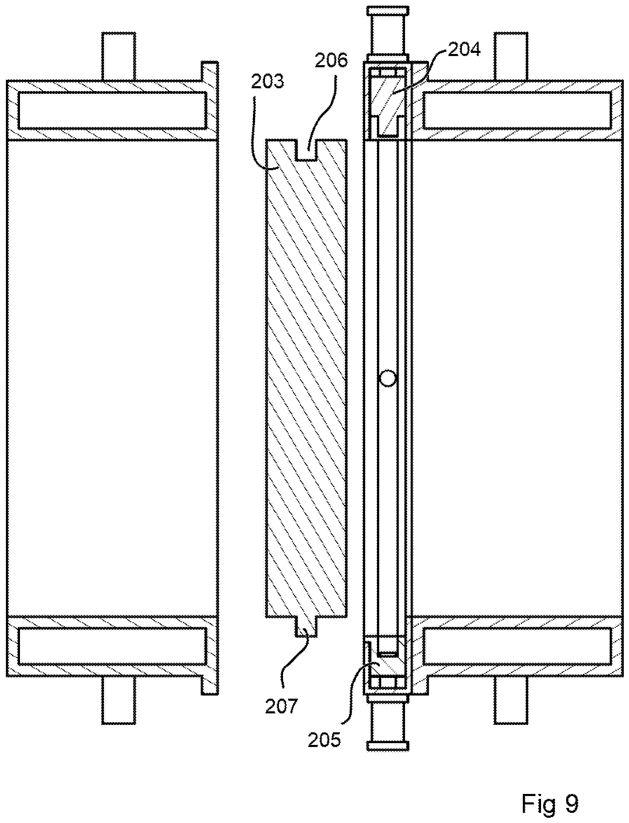

Figures 8 and 9 show further embodiments of a device 101 according to the invention, which is shown simplified for purposes of clarity. The device 101 comprises a first mould body 108 and a second mould body 109, with respectively a box-shaped first mould wall 111 and a further first mould wall 113. The first mould body 108 and the second mould body 109 also comprise a second mould wall 112 and a further second mould wall 114 respectively (not shown in figure 9), and the associated ancillaries such as (not shown) a first steam cavity, a further first steam cavity, a sealing body and a further sealing body, shaft bodies and pushrods. Between the first mould body 108 and the second mould body 109, the device 101 comprises an intermediate body 201. The intermediate body 201 comprises a box-shaped intermediate mould wall 202. The box form of the intermediate mould wall 202 is identical to that of the first mould wall 111 and the further first mould wall 113. A male formed body 204 is provided on two of the four mutually adjoining, straight sides of the intermediate mould wall 202, and a female formed body 205 on two other straight sides of the intermediate mould wall 202. The male formed body 204 forms a groove 206 on the corresponding peripheral sides of product 203, in this example in the middle of the thickness of product 203. The formed body 205 forms a tongue 207 in the corresponding straight peripheral sides of the product 203. To release the product 203 from the mould cavity 115, the formed bodies 204, 205 can be moved radially outward by means of actuators 208, 209, and the first mould body 108 and the intermediate body 201 one on side and the second mould body 109 on the other can be moved away from each other, so that the situation shown in figure 9 is achieved. By withdrawing the second mould body 109, the mould cavity 115 is opened and product 203 can be released. Figure 10 shows the resulting product 203 with the grooves 206 and the tongues 207.

## Claims

1. Device (1; 101) for production of an at least substantially plate-like foamed moulded plastic product (75; 79; 203), comprising a frame (2), a mould having a first mould body (8; 108) and a second mould body (9; 109); first positioning means for moving the first mould body and/or the second mould body to and fro, parallel to a displacement direction and relative to the frame, between a closed state of the mould in which at least the first mould body and the second mould body form a mould cavity (15) for production of the plastic product therein, and an open state of the mould in which the mould cavity is opened to in order to release the product formed in the mould cavity; first supply means (71) for supplying plastic material to be foamed to the mould cavity, and second supply means for supplying, in the closed state of the mould, steam under high pressure to the mould cavity filled with the plastic material; the first mould body comprising a box-shaped first mould wall (11; 111), of which at least part helps form the mould cavity, a second mould wall (12; 112) which is provided on the inside of the box form of the first mould wall and which connects to the first mould wall, which second mould wall also helps form the mould cavity and via which second mould wall, by means of the second supply means, steam under high pressure and distributed over the surface of the second mould wall can be supplied to the mould cavity; a sealing body (16) which is provided on the inside of the box form of the first mould wall on the side of the second mould wall facing away from the mould cavity and connecting to the first mould wall; first sealing means (18, 19) for sealing against high pressure the seam between the first mould wall and the sealing body; wherein a first steam cavity (20) is formed between the first mould wall, the second mould wall and the sealing body, and the second supply means are configured for supplying steam from the first steam cavity via the second mould wall to the mould cavity; the device furthermore comprising second positioning means (49, 23) for jointly moving, in a movement direction (24) which extends parallel to the displacement direction, the second mould wall and the sealing body relative to the first mould wall in order to change the mould cavity, the second mould body (9; 109) comprising a box-shaped further first mould wall (13), of which at least part helps form the mould cavity (15), and a further second mould wall (14) which is provided on the inside of the box form of the further first mould wall (13) and which adjoins the further first mould wall (13), which further second mould wall (14) also helps form the mould cavity (15) and via which further second mould wall (14), by means of the second supply means, steam distributed over the surface of the second mould wall (14) under high pressure can be supplied to the mould cavity (15), **characterized in that** the box form of the first mould wall (11) is displaceable in a further displacement direction relative to the box form of the further first mould wall (13) so that the mould cavity (15) has a stepped form.

2. Device according to claim 1, wherein the device is provided with adjustment means (43) to allow adjustment of the amount by which the box form of the first mould wall is displaced relative to the box form of the further first mould wall.

3. Device according to claim 1 or 2, wherein the further displacement direction extends perpendicular to the displacement direction, further preferably parallel to a diagonal of the box form of the first mould wall.

4. Device according to claim 1, 2 or 3, wherein the second mould body (9; 109) furthermore comprises a further sealing body (17) which is provided on the inside of the box form of the further first mould wall ( on the side of the further second mould wall facing away from the mould cavity, and which adjoins the further first mould wall, further first sealing means (18, 19) for sealing against high pressure the seam between the further first mould wall and the further sealing body, wherein a further first steam cavity (21) is formed between the further first mould wall, the further second mould wall and the further sealing body, and the second supply means are configured for supplying steam from the further first steam cavity via the further second mould wall to the mould cavity, wherein the device furthermore comprises further second positioning means (23, 25) which are configured for jointly moving, in a further movement direction which extends parallel to the length direction of the box form of the further first mould wall, the further second mould wall and the further sealing body relative to the first mould wall in order to change the mould cavity.

5. Device according to any one of the preceding claims, wherein the box form of the first mould wall is identical to the box form of the further first mould wall.

6. Device according to any of the preceding claims, wherein the first mould body and the second mould body, on mutually facing sides, have contact faces (36, 40) oriented perpendicularly to the displacement direction, which contact faces in the closed state of the mould lie against each other or against a box-shaped intermediate body (201) of the device which is provided between the first mould body and the second mould body.

7. Device according to any of the preceding claims, wherein the first mould body comprises first connecting means (27) which connect the second mould wall and the sealing body together, wherein the first connecting means are configured to allow adjustment of an angle which the second mould wall encloses with the positioning direction.

8. Device according to any of the preceding claims, wherein the device is provided with heating means for heating the first mould wall, the heating means preferably comprising a second steam cavity (33) on the outside of the first mould wall, to which steam can be supplied by means of the second supply means, the first mould wall further preferably being configured to allow the passage of steam from the second steam cavity to the mould cavity and/or to the first steam cavity.

9. Device according to any of the preceding claims, wherein in the closed state of the mould, the dimension of the mould cavity viewed in a direction perpendicular to the second mould wall, at least because of the function of the second positioning means, is adjustable between a minimum dimension and a maximum dimension, wherein the ratio between the maximum dimension and the minimum dimension is at least 1.5.

10. Device according to any of the preceding claims, wherein the first mould body and the second mould body, on mutually facing sides, have contact faces (36, 40) oriented perpendicularly to the displacement direction, which contact faces in the sealed state of the mould lie against each other or against a box-shaped intermediate body (201) of the device which is provided between the first mould body and the second mould body.

11. Device according to claim 10, wherein the device comprises second sealing means for, in the sealed state of the mould, sealing the seam between the contact faces of the first mould body and the second mould body, between the first mould body and the intermediate body, and/or between the second mould body and the intermediate body.

12. Device according to claim 10 or 11, wherein the contact faces lie on mutually facing ends of the first mould body and the second mould body.

13. Device according to claim 10, 11 or 12, wherein the device is provided with an intermediate body, wherein the intermediate body is provided with a box-shaped intermediate mould wall (202) which helps form the mould cavity, wherein the box form of the intermediate mould wall is identical to that of the first mould wall and that of the further first mould wall and is located in line therewith, the intermediate mould wall comprising a number of wall parts, of which at least one male wall part is provided with an edge oriented towards the mould cavity and is movable between an innermost state and an outermost state, wherein in the innermost state the edge, viewed in a direction parallel to the movement direction, extends inside the box form of the first mould wall, and in the outermost state the edge extends outside the box form of the first mould wall, and wherein at least one female wall part of the number of wall parts is provided with a groove facing towards the mould cavity and is movable between an innermost state and an outermost state, wherein the at least one female wall part, in both the innermost state and in the outermost state, extends completely outside the box form of the first mould wall, and wherein the distance between the innermost state and the outermost state of the female wall part is at least as large as the height of the groove, and wherein the cross-section of the edge of the at least one male wall part fits into the cross-section of the groove of the at least one female wall part.

14. Method for production of a foamed plastic product using a device according to any of the preceding claims, comprising the steps of:
a. displacing the box form of the first mould wall relative to the box form of the further first mould wall in a direction perpendicular to the movement direction,
b. bringing the mould into the closed state,
c. supplying the plastic material particles to be foamed to the mould cavity,
d. supplying, from at least the first steam cavity, steam to the mould cavity filled with plastic material particles to be foamed, wherein the material particles expand and adhere to each other and the plastic product is formed at least partially,
e. bringing the mould to the open state,
f. releasing the product.

## Patentansprüche

1. Vorrichtung (1; 101) zum Herstellen eines mindestens im Wesentlichen plattenförmigen, geschäumten Formkunststoffprodukts (75; 79; 203), umfassend einen Rahmen (2), eine Form mit einem ersten Formkörper (8; 108) und einem zweiten Formkörper (9; 109); erste Positioniermittel zum Hin- und Herbewegen des ersten Formkörpers und/oder des zweiten Formkörpers parallel zu einer Verschiebungsrichtung und relativ zu dem Rahmen zwischen einem geschlossenen Zustand der Form, in dem mindestens der erste Formkörper und der zweite Formkörper einen Formhohlraum (15) zum Herstellen des Kunststoffprodukts darin bilden, und einem geöffneten Zustand der Form, in dem der Formhohlraum geöffnet ist, um das in dem Formhohlraum gebildete Produkt freizugeben; ein erstes Zufuhrmittel (71) zum Zuführen von aufzuschäumendem Kunststoffmaterial in den Formhohlraum und ein zweites Zufuhrmittel zum Zuführen von Dampf unter hohem Druck in den mit dem Kunststoffmaterial gefüllten Formhohlraum im geschlossenen Zustand der Form; wobei der erste Formkörper eine kastenförmige erste Formwand (11; 111), von der mindestens ein Teil zum Bilden des Formhohlraums beiträgt, eine zweite Formwand (12; 112), die an der Innenseite der Kastenform der ersten Formwand vorgesehen ist und die mit der ersten Formwand verbunden ist, wobei die zweite Formwand ebenfalls zum Bilden des Formhohlraums beiträgt und über die zweite Formwand mittels des zweiten Zufuhrmittels Dampf unter hohem Druck und über die Oberfläche der zweiten Formwand verteilt dem Formhohlraum zugeführt werden kann; einen Dichtungskörper (16), der an der Innenseite der Kastenform der ersten Formwand auf der vom Formhohlraum abgewandten Seite der zweiten Formwand vorgesehen ist und mit der ersten Formwand verbunden ist; ein erstes Dichtungsmittel (18, 19) zum Abdichten der Naht zwischen der ersten Formwand und dem Dichtungskörper gegen hohen Druck; wobei ein erster Dampfhohlraum (20) zwischen der ersten Formwand, der zweiten Formwand und dem Dichtungskörper gebildet wird und das zweite Zufuhrmittel zum Zuführen von Dampf aus dem ersten Dampfhohlraum über die zweite Formwand in den Formhohlraum ausgelegt ist, umfasst; wobei die Vorrichtung ferner zweite Positioniermittel (49, 23) umfasst, um die zweite Formwand und den Dichtungskörper gemeinsam in einer Bewegungsrichtung (24), die sich parallel zur Verschiebungsrichtung erstreckt, relativ zur ersten Formwand zu bewegen, um den Formhohlraum zu verändern, wobei der zweite Formkörper (9; 109) eine kastenförmige weitere erste Formwand (13), von der mindestens ein Teil zum Bilden des Formhohlraums (15) beiträgt, und eine weitere zweite Formwand (14) umfasst, die an der Innenseite der Kastenform der weiteren ersten Formwand (13) vorgesehen ist und die an die weitere erste Formwand (13) angrenzt, wobei die weitere zweite Formwand (14) ebenfalls zum Bilden des Formhohlraums (15) beiträgt und über die weitere zweite Formwand (14) mittels des zweiten Zufuhrmittels über die Oberfläche der zweiten Formwand (14) verteilter Dampf unter hohem Druck dem Formhohlraum (15) zugeführt werden kann, **dadurch gekennzeichnet, dass** die Kastenform der ersten Formwand (11) in einer weiteren Verschiebungsrichtung relativ zur Kastenform der weiteren ersten Formwand (13) verschiebbar ist, sodass der Formhohlraum (15) eine Stufenform aufweist.

2. Vorrichtung gemäß Anspruch 1, wobei die Vorrichtung mit einem Einstellmittel (43) versehen ist, um die Einstellung des Betrags zu ermöglichen, um den die Kastenform der ersten Formwand relativ zur Kastenform der weiteren ersten Formwand verschoben wird.

3. Vorrichtung gemäß Anspruch 1 oder 2, wobei die weitere Verschiebungsrichtung rechtwinklig zur Verschiebungsrichtung, ferner bevorzugt parallel zu einer Diagonale der Kastenform der ersten Formwand verläuft.

4. Vorrichtung gemäß Anspruch 1, 2 oder 3, wobei der zweite Formkörper (9; 109) ferner einen weiteren Dichtungskörper (17), der auf der Innenseite der Kastenform der weiteren ersten Formwand auf der dem Formhohlraum abgewandten Seite der weiteren zweiten Formwand vorgesehen ist und der an die weitere erste Formwand anschließt, weitere erste Dichtungsmittel (18, 19) zum Abdichten der Naht zwischen der weiteren ersten Formwand und dem weiteren Dichtungskörper gegen Hochdruck, wobei zwischen der weiteren ersten Formwand, der weiteren zweiten Formwand und dem weiteren Dichtungskörper ein weiterer erster Dampfhohlraum (21) gebildet wird, und das zweite Zufuhrmittel zum Zuführen von Dampf aus dem weiteren ersten Dampfhohlraum über die weitere zweite Formwand zum Formhohlraum ausgelegt ist, umfasst, wobei die Vorrichtung ferner weitere zweite Positioniermittel (23, 25) umfasst, die zum gemeinsamen Bewegen der weiteren zweiten Formwand und des weiteren Dichtkörpers in einer weiteren Bewegungsrichtung, die parallel zur Längsrichtung der Kastenform der weiteren ersten Formwand verläuft, relativ zur ersten Formwand ausgebildet sind, um den Formhohlraum zu verändern.

5. Vorrichtung gemäß einem der vorhergehenden Ansprüche, wobei die Kastenform der ersten Formwand mit der Kastenform der weiteren ersten Formwand identisch ist.

6. Vorrichtung gemäß einem der vorhergehenden Ansprüche, wobei der erste Formkörper und der zweite Formkörper an einander zugewandten Seiten rechtwinklig zur Verschiebungsrichtung ausgerichtete Kontaktflächen (36, 40) aufweisen, die im geschlossenen Zustand der Form aneinander oder an einem kastenförmigen Zwischenkörper (201) der Vorrichtung anliegen, der zwischen dem ersten Formkörper und dem zweiten Formkörper vorgesehen ist.

7. Vorrichtung gemäß einem der vorhergehenden Ansprüche, wobei der erste Formkörper erste Verbindungsmittel (27) umfasst, die die zweite Formwand und den Dichtkörper miteinander verbinden, wobei die ersten Verbindungsmittel dazu ausgelegt sind, die Einstellung eines Winkels zu ermöglichen, den die zweite Formwand mit der Positionierrichtung einschließt.

8. Vorrichtung gemäß einem der vorhergehenden Ansprüche, wobei die Vorrichtung mit einem Heizmittel zum Erwärmen der ersten Formwand versehen ist, wobei das Heizmittel vorzugsweise einen zweiten Dampfhohlraum (33) an der Außenseite der ersten Formwand umfasst, dem mittels des zweiten Zufuhrmittels Dampf zugeführt werden kann, wobei die erste Formwand ferner vorzugsweise dazu ausgelegt ist, den Durchgang von Dampf aus dem zweiten Dampfhohlraum in den Formhohlraum und/oder in den ersten Dampfhohlraum zu ermöglichen.

9. Vorrichtung gemäß einem der vorhergehenden Ansprüche, wobei im geschlossenen Zustand der Form die Abmessung des Formhohlraums in einer Richtung rechtwinklig zur zweiten Formwand gesehen mindestens aufgrund der Funktion des zweiten Positioniermittels zwischen einer minimalen Abmessung und einer maximalen Abmessung einstellbar ist, wobei das Verhältnis zwischen der maximalen Abmessung und der minimalen Abmessung mindestens 1,5 beträgt.

10. Vorrichtung gemäß einem der vorhergehenden Ansprüche, wobei der erste Formkörper und der zweite Formkörper an einander zugewandten Seiten rechtwinklig zur Verschiebungsrichtung ausgerichtete Kontaktflächen (36, 40) aufweisen, die im abgedichteten Zustand der Form aneinander oder an einem kastenförmigen Zwischenkörper (201) der Vorrichtung anliegen, der zwischen dem ersten Formkörper und dem zweiten Formkörper vorgesehen ist.

11. Vorrichtung gemäß Anspruch 10, wobei die Vorrichtung ein zweites Dichtungsmittel umfasst, um im abgedichteten Zustand der Form die Naht zwischen den Kontaktflächen des ersten Formkörpers und des zweiten Formkörpers, zwischen dem ersten Formkörper und dem Zwischenkörper und/oder zwischen dem zweiten Formkörper und dem Zwischenkörper abzudichten.

12. Vorrichtung gemäß Anspruch 10 oder 11, wobei die Kontaktflächen an einander zugewandten Enden des ersten Formkörpers und des zweiten Formkörpers liegen.

13. Vorrichtung gemäß Anspruch 10, 11 oder 12, wobei die Vorrichtung mit einem Zwischenkörper versehen ist, wobei der Zwischenkörper mit einer kastenförmigen Zwischenformwand (202) versehen ist, die zum Bilden des Formhohlraums beiträgt, wobei die Kastenform der Zwischenformwand identisch mit derjenigen der ersten Formwand und derjenigen der weiteren ersten Formwand ist und sich in einer Linie mit dieser befindet, wobei die Zwischenformwand aus einer Anzahl von Wandteilen besteht, von denen mindestens ein männliches Wandteil mit einer zum Formhohlraum hin gerichteten Kante versehen und zwischen einem innersten Zustand und einem äußersten Zustand bewegbar ist, wobei sich die Kante im innersten Zustand, in einer Richtung parallel zur Bewegungsrichtung gesehen, innerhalb der Kastenform der ersten Formwand erstreckt, und sich die Kante im äußersten Zustand außerhalb der Kastenform der ersten Formwand erstreckt, und wobei mindestens ein weibliches Wandteil der Anzahl von Wandteilen mit einer Nut versehen ist, die dem Formhohlraum zugewandt ist, und zwischen einem innersten Zustand und einem äußersten Zustand bewegbar ist, wobei das mindestens eine weibliche Wandteil sowohl im innersten Zustand als auch im äußersten Zustand sich sowohl im innersten Zustand als auch im äußersten Zustand vollständig außerhalb der Kastenform der ersten Formwand erstreckt, und wobei der Abstand zwischen dem innersten Zustand und dem äußersten Zustand des weiblichen Wandteils mindestens so groß wie die Höhe der Nut ist, und wobei der Querschnitt der Kante des mindestens einen männlichen Wandteils in den Querschnitt der Nut des mindestens einen weiblichen Wandteils passt.

14. Verfahren zum Herstellen eines geschäumten Kunststoffprodukts unter Verwendung einer Vorrichtung gemäß einem der vorhergehenden Ansprüche, umfassend die Schritte:
a. Verschieben der Kastenform der ersten Formwand relativ zur Kastenform der weiteren ersten Formwand in einer Richtung rechtwinklig zur Bewegungsrichtung,
b. Bringen der Form in den geschlossenen Zustand,
c. Zuführen der aufzuschäumenden Kunststoffmaterialpartikel in den Formhohlraum,
d. Zuführen von Dampf aus mindestens dem ersten Dampfhohlraum in den mit aufzuschäumenden Kunststoffmaterialpartikeln gefüllten Formhohlraum, wobei die Materialpartikel expandieren und aneinander haften und das Kunststoffprodukt mindestens teilweise gebildet wird,
e. Bringen der Form in den geöffneten Zustand,
f. Freigeben des Produkts.

## Revendications

1. Dispositif (1 ; 101) pour la production d'un produit en plastique moulé en mousse au moins sensiblement en forme de plaque (75 ; 79 ; 203), comprenant un cadre (2), un moule ayant un premier corps de moule (8 ; 108) et un deuxième corps de moule (9; 109) ; des premiers moyens de positionnement pour déplacer le premier corps de moule et/ou le deuxième corps de moule d'avant en arrière, parallèlement à une direction de déplacement et par rapport au cadre, entre un état fermé du moule dans lequel au moins le premier corps de moule et le deuxième corps de moule forment une cavité de moule (15) pour la production du produit en plastique dedans, et un état ouvert du moule dans lequel la cavité de moule est ouverte afin de libérer le produit formé dans la cavité de moule ; des premiers moyens d'alimentation (71) pour fournir la matière plastique à mousser à la cavité de moule, et des deuxièmes moyens d'alimentation pour fournir, dans l'état fermé du moule, de la vapeur sous haute pression à la cavité de moule remplie de matière plastique ; le premier corps de moule comprenant une première paroi de moule en forme de boîte (11 ; 111), dont au moins une partie aide à former la cavité de moule, une deuxième paroi de moule (12 ; 112) qui est prévue sur la partie intérieure de la forme de boîte de la première paroi de moule et qui se relie à la première paroi de moule, laquelle deuxième paroi de moule aide également à former la cavité de moule et par cette deuxième paroi de moule, au moyen des deuxièmes moyens d'alimentation, de la vapeur sous haute pression et répartie sur la surface de la deuxième paroi de moule peut être fournie à la cavité de moule ; un corps d'étanchéité (16) qui est prévu sur la partie intérieure de la forme de boîte de la première paroi de moule sur le côté de la deuxième paroi de moule opposé à la cavité de moule et se reliant à la première paroi de moule ; des premiers moyens d'étanchéité (18, 19) pour rendre étanche à la haute pression le joint entre la première paroi de moule et le corps d'étanchéité ; où une première cavité de vapeur (20) est formée entre la première paroi de moule, la deuxième paroi de moule et le corps d'étanchéité, et les deuxièmes moyens d'alimentation sont configurés pour fournir de la vapeur de la première cavité de vapeur via la deuxième paroi de moule à la cavité de moule ; le dispositif comprenant en outre des deuxièmes moyens de positionnement (49, 23) pour déplacer conjointement, dans une direction de mouvement (24) qui s'étend parallèlement à la direction de déplacement, la deuxième paroi de moule et le corps d'étanchéité par rapport à la première paroi de moule afin de changer la cavité de moule, le deuxième corps de moule (9 ; 109) comprenant une première paroi de moule supplémentaire en forme de boîte (13), dont au moins une partie aide à former la cavité de moule (15), et une deuxième paroi de moule supplémentaire (14) qui est prévue sur la partie intérieure de la forme de boîte de la première paroi de moule supplémentaire (13) et qui est contiguë à la première paroi de moule supplémentaire (13), laquelle deuxième paroi de moule supplémentaire (14) aide également à former la cavité de moule (15) et par cette deuxième paroi de moule supplémentaire (14), au moyen des deuxièmes moyens d'alimentation, de la vapeur répartie sur la surface de la deuxième paroi de moule (14) sous haute pression peut être fournie à la cavité de moule (15), **caractérisé en ce que** la forme de boîte de la première paroi de moule (11) peut se déplacer dans une direction de déplacement supplémentaire par rapport à la forme de boîte de la première paroi de moule supplémentaire (13) de sorte que la cavité de moule (15) ait une forme étagée.

2. Dispositif selon la revendication 1, dans lequel le dispositif est muni de moyens de réglage (43) pour permettre le réglage de la quantité avec laquelle la forme de boîte de la première paroi de moule se déplace par rapport à la forme de boîte de la première paroi de moule supplémentaire.

3. Dispositif selon la revendication 1 ou 2, dans lequel la direction de déplacement supplémentaire s'étend perpendiculairement à la direction de déplacement, en outre de préférence parallèlement à une diagonale de la forme de boîte de la première paroi de moule.

4. Dispositif selon la revendication 1, 2 ou 3, dans lequel le deuxième corps de moule (9 ; 109) comprend en outre un corps d'étanchéité supplémentaire (17) qui est prévu sur la partie intérieure de la forme de boîte de la première paroi de moule supplémentaire sur le côté de la deuxième paroi de moule supplémentaire opposé à la cavité de moule, et qui est contigu à la première paroi de moule supplémentaire, des premiers moyens d'étanchéité supplémentaires (18, 19) pour rendre étanche à la haute pression le joint entre la première paroi de moule supplémentaire et le corps d'étanchéité supplémentaire, où une première cavité de vapeur supplémentaire (21) est formée entre la première paroi de moule supplémentaire, la deuxième paroi de moule supplémentaire et le corps d'étanchéité supplémentaire, et les deuxièmes moyens d'alimentation sont configurés pour fournir de la vapeur de la première cavité de vapeur supplémentaire via la deuxième paroi de moule supplémentaire à la cavité de moule, où le dispositif comprend en outre des deuxièmes moyens de positionnement supplémentaires (23, 25) qui sont configurés pour déplacer conjointement, dans une direction de mouvement supplémentaire qui s'étend parallèlement à la direction de la longueur de la forme de boîte de la première paroi de moule supplémentaire, la deuxième paroi de moule supplémentaire et le corps d'étanchéité supplémentaire par rapport à la première paroi de moule afin de changer la cavité de moule.

5. Dispositif selon l'une quelconque des revendications précédentes, dans lequel la forme de boîte de la première paroi de moule est identique à la forme de boîte de la première paroi de moule supplémentaire.

6. Dispositif selon l'une des revendications précédentes, dans lequel le premier corps de moule et le deuxième corps de moule, sur des côtés se faisant mutuellement face, ont des faces de contact (36, 40) orientées perpendiculairement à la direction de déplacement, lesquelles faces de contact dans l'état fermé du moule reposent l'une contre l'autre ou contre un corps intermédiaire en forme de boîte (201) du dispositif qui est prévu entre le premier corps de moule et le deuxième corps de moule.

7. Dispositif selon l'une des revendications précédentes, dans lequel le premier corps de moule comprend des premiers moyens de liaison (27) qui relient la deuxième paroi de moule et le corps d'étanchéité ensemble, où les premiers moyens de liaison sont configurés pour permettre le réglage d'un angle que la deuxième paroi de moule forme avec la direction de positionnement.

8. Dispositif selon l'une des revendications précédentes, dans lequel le dispositif est muni de moyens de chauffage pour chauffer la première paroi de moule, les moyens de chauffage comprenant de préférence une deuxième cavité de vapeur (33) sur la partie extérieure de la première paroi de moule, à laquelle de la vapeur peut être fournie au moyen des deuxièmes moyens d'alimentation, la première paroi de moule étant en outre de préférence configurée pour permettre le passage de la vapeur de la deuxième cavité de vapeur à la cavité de moule et/ou à la première cavité de vapeur.

9. Dispositif selon l'une des revendications précédentes, dans lequel, dans l'état fermé du moule, la dimension de la cavité de moule vue dans une direction perpendiculaire à la deuxième paroi de moule, au moins en raison de la fonction des deuxièmes moyens de positionnement, peut être réglée entre une dimension minimale et une dimension maximale, où le rapport entre la dimension maximale et la dimension minimale est d'au moins 1,5.

10. Dispositif selon l'une des revendications précédentes, dans lequel le premier corps de moule et le deuxième corps de moule, sur des côtés se faisant mutuellement face, ont des faces de contact (36, 40) orientées perpendiculairement à la direction de déplacement, lesquelles faces de contact dans l'état étanche du moule reposent l'une contre l'autre ou contre un corps intermédiaire en forme de boîte (201) du dispositif qui est prévu entre le premier corps de moule et le deuxième corps de moule.

11. Dispositif selon la revendication 10, dans lequel le dispositif comprend des deuxièmes moyens d'étanchéité pour, dans l'état étanche du moule, rendre étanche le joint entre les faces de contact du premier corps de moule et du deuxième corps de moule, entre le premier corps de moule et le corps intermédiaire, et/ou entre le deuxième corps de moule et le corps intermédiaire.

12. Dispositif selon la revendication 10 ou 11, dans lequel les faces de contact reposent sur des extrémités se faisant mutuellement face du premier corps de moule et du deuxième corps de moule.

13. Dispositif selon la revendication 10, 11 ou 12, dans lequel le dispositif est muni d'un corps intermédiaire, dans lequel le corps intermédiaire est muni d'une paroi de moule intermédiaire en forme de boîte (202) qui aide à former la cavité de moule, où la forme de boîte de la paroi de moule intermédiaire est identique à celle de la première paroi de moule et à celle de la première paroi de moule supplémentaire et est située en alignement avec celles-ci, la paroi de moule intermédiaire comprenant un certain nombre de parties de paroi, dont au moins une partie de paroi mâle est munie d'un bord orienté vers la cavité de moule et est mobile entre un état le plus interne et un état le plus externe, où dans l'état le plus interne, le bord, vu dans une direction parallèle à la direction de mouvement, s'étend à l'intérieur de la forme de boîte de la première paroi de moule, et dans l'état le plus externe, le bord s'étend à l'extérieur de la forme de boîte de la première paroi de moule, et où au moins une partie de paroi femelle du nombre de parties de paroi est munie d'une rainure tournée vers la cavité de moule et est mobile entre un état le plus interne et un état le plus externe, où l'au moins une partie de paroi femelle, à la fois dans l'état le plus interne et dans l'état le plus externe, s'étend complètement à l'extérieur de la forme de boîte de la première paroi de moule, et où la distance entre l'état le plus interne et l'état le plus externe de la partie de paroi femelle est au moins aussi grande que la hauteur de la rainure, et où la section transversale du bord de l'au moins une partie de paroi mâle s'adapte dans la section transversale de la rainure de l'au moins une partie de paroi femelle.

14. Procédé de production d'un produit en plastique en mousse utilisant un dispositif selon l'une des revendications précédentes, comprenant les étapes :
a. de déplacement de la forme de boîte de la première paroi de moule par rapport à la forme de boîte de la première paroi de moule supplémentaire dans une direction perpendiculaire à la direction de mouvement,
b. de mise du moule dans l'état fermé,
c. de fourniture des particules de matière plastique à mousser à la cavité de moule,
d. de fourniture, d'au moins la première cavité de vapeur, de la vapeur à la cavité de moule remplie de particules de matière plastique à mousser, où les particules de matière s'expansent et adhèrent les unes aux autres et le produit en plastique est formé au moins partiellement,
e. de mise du moule à l'état ouvert,
f. de libération du produit.
